# DEMANDE DE BREVET EUROPEEN

(11) **EP 1 445 286 A1**
(43) Date de publication de la demande: **11.08.2004**
(21) Numéro de dépôt: 04290285.8
(22) Date de dépôt: 04.02.2004
(51) Int. Cl.: C08L 101/00

(54) **Procédé pour améliorer la productivité de la fabrication d'articles à base de polymères thermoplastiques et articles ainsi obtenus**

(30) Priorité: 04.02.2003 FR 0301262
(71) Demandeur: Atofina, 92800 Puteaux (FR)
(72) Inventeur: Guyomarch, Patrick, 26100 Romans sur Isere (FR)

(57) **Abrégé**

La présente invention concerne un procédé permettant d'améliorer la productivité au cours de la fabrication d'articles à base de polymères thermoplastiques, par addition à ces polymères d'agents modifiants du type copolymère d'éthylène et d'au moins un ester d'acides carboxyliques, à des taux compris entre 0.5 et 5% en poids par rapport au poids du mélange.

Ce procédé trouve une application avantageuse en particulier dans le moulage par injection et dans l'extrusion-soufflage de corps creux.

L'invention se rapporte aussi aux articles obtenus par ledit procédé.

## Description

Cette invention concerne un procédé permettant d'améliorer la productivité au cours de la fabrication d'articles à base de polymères thermoplastiques rigides, semi-cristallins ou amorphes, cette fabrication étant réalisée notamment par moulage par injection, ou par extrusion-soufflage, par addition de faibles quantités d'agents modifiants compatibles avec lesdits polymères, du type des copolymères de l'éthylène avec un ester d'acides carboxyliques.

La productivité d'une presse à injecter des objets en matière plastique est déterminée par le temps de cycle d'un moulage qui se décompose en temps de remplissage du moule, généralement court, et en temps de refroidissement. Le temps de refroidissement est le facteur primordial du temps de cycle ; on arrête de refroidir la pièce dans le moule, dès qu'on peut l'éjecter du moule et la manipuler sans dommage pour sa qualité.

Pour obtenir un remplissage correct du moule, on injecte la matière fondue à des températures élevées, pour la rendre plus fluide, et à vitesses d'injection élevées pour obtenir le même effet par le cisaillement et l'auto-échauffement.

Plus cette température de la matière injectée est élevée, plus il faudra du temps à la matière fondue pour la refroidir et l'amener à une température suffisamment basse pour éjecter l'article du moule sans dommage. Les pratiques pour obtenir un bon remplissage du moule ne vont donc pas dans le sens d'une productivité améliorée. Pour obtenir cette productivité , on peut avoir recours à des additifs, agents de mise en oeuvre ou agents modifiants, qui ont pour fonction d'améliorer la fluidité de la matière sans altérer ses propriétés .Ces agents de mise en oeuvre peuvent être des agents lubrifiants tels que l'acide stéarique et ses sels métalliques (de magnésium, de sodium, de zinc, etc...), des cires de polyéthylènes, des polymères fluorés de la famille des copolymères du fluorure de vinylidène, etc...

Le brevet WO 91/05823 décrit l'utilisation de copolymères de l'éthylène avec le monoxyde de carbone pour améliorer la mise en oeuvre des polycarbonates. Dans ce cas précis, des précautions particulières doivent être prises pour éviter la thermodégradation de l'agent de mise en oeuvre.

Par ailleurs, il est bien connu d'utiliser pour améliorer le procédé d'extrusion de résines du type polyéthylène, des additifs tels que des copolymères d'éthylène et de divers comonomères tels qu'en particulier l'acétate de vinyle ou les esters alkyl d'acide (meth)acrylique, comme décrit dans les brevets US 3 422 055 et US 3 808 047.Toutefois ces documents ne se rapportent pas à des procédés de moulage par injection ou d'extrusion-soufflage.

La demande de brevet EP 0 582 383 décrit l'utilisation de copolymères d'éthylène/ acrylate d'alkyle dans des compositions de PET (polyéthylène téréphtalate), permettant de réduire les problèmes de « plate-out » (encrassement) sur les moules lors du moulage par injection de ces compositions ; il n'est pas suggéré d'influence sur la réduction du temps de cycle.

Le document « Patent abstract of Japan », vol.012, n° 186 (C-500),31 mai 1988, correspondant à JP 62 292857, décrit l'emploi d'un modifiant à base d'un copolymère d'éthylène et d'acrylate d'alkyle ayant au moins 6 atomes de carbone, pour améliorer le moulage et les propriété thermo-mécaniques de matériaux polymériques cristallins, mais ne se préoccupe pas du procédé de moulage.

Or, le temps de cycle d'une machine d'extrusion-soufflage de corps creux est fortement dépendant du temps de refroidissement de l'article moulé, et plus cet article peut être extrudé à basse température, plus le temps de cycle sera court.

La demanderesse a maintenant découvert que les copolymères de l'éthylène et d'un ester d'acides carboxyliques saturés ou insaturés, tel que notamment un (meth)acrylate d'alkyle, pouvaient être utilisés comme agents de mise en oeuvre ou modifiants de nombreux polymères thermoplastiques rigides, semi-cristallins ou amorphes, à des taux d'introduction compris entre 0.5 et 5 % en poids par rapport au mélange, de façon à modifier la rhéologie et la température de mise en oeuvre de ces polymères.

Cette addition entraîne de nombreux avantages, en particulier, pour des techniques de moulage par injection :
- une réduction du temps de cycle d'injection d'environ 5 à 35 %,
- une réduction du poids de la pièce obtenue d'environ 1 à 3%,
- une réduction de la consommation d'énergie et
- une augmentation de la durée de vie des outillages (moules).

La présente invention concerne un procédé permettant d'améliorer la productivité au cours de la fabrication d'articles à base de polymères thermoplastiques, par addition en mélange à ceux-ci d'agents modifiants, caractérisé en ce que lesdits agents modifiants sont des copolymères d'éthylène et d'au moins un ester d'acides carboxyliques saturés ou insaturés, et que le taux d'addition de ces agents modifiant est compris entre 0.5 et 5% en poids par rapport au poids du mélange, de façon à réduire le temps de cycle dudit procédé. Ce procédé s'applique plus particulièrement au procédé de moulage par injection.

Toutefois, le même procédé pour modifier la rhéologie et la température de mise en oeuvre peut être appliqué à l'extrusion-soufflage de corps creux.

Par agent de mise en oeuvre ou modifiant en injection, on entend un additif efficace à faible concentration pour modifier la rhéologie de la matière à injecter de façon à obtenir des gains appréciables dans les cadences de mise en oeuvre. Cette additivation se fait sans altérer de façon significatives les propriétés de la pièce injectée, c'est à dire son aspect, ses dimensions, ses propriétés mécaniques. Il est possible par cette additivation, de se mettre dans des conditions de mise en oeuvre qui réduisent le temps de maintien et augmentent la vitesse de cristallisation. Pour certaines matières cela peut se traduire par une légère réduction du taux de cristallinité et du poids de la pièce.

A titre de comonomères de l'éthylène, on peut citer :
- les esters d'acides carboxyliques insaturés, tels que par exemple les (méth)acrylates d'alkyle, l'alkyle pouvant avoir jusqu'à 24 atomes de carbone,.
   Des exemples d'acrylate ou méthacrylate d'alkyle sont notamment l'acrylate de méthyle, l'acrylate d'éthyle, l'acrylate de n-butyle, l'acrylate d'isobutyle, l'acrylate d'éthyl-2-hexyle, l'acrylate de cyclohexyle, l'acrylate de n-octyle. le méthacrylate de méthyle, le méthacrylate d'éthyle, et le méthacrylate de butyle.
   De façon préférée, selon l'invention, on utilise comme agents modifiants des copolymères d'éthylène et de (méth)acrylates d'alkyle dont l'alkyle comprend moins de 6 atomes de carbone.
   Les copolymères éthylène-(méth)acrylate d'alkyle peuvent être obtenus par voie radicalaire sous haute pression en réacteur autoclave ou tubulaire, et peuvent contenir jusqu'à 60% en poids de (méth)acrylate et de préférence 2 à 40%. Leur MFI (Melt Flow Index ou Indice de fluidité) est avantageusement compris entre 5 et 2000 g/10 mn, et de préférence entre 60 et 1000 (mesuré à 190°C sous une pression de 2,16 kg selon la norme ASTM D 1238).
- les esters vinyliques d'acides carboxyliques saturés tels que par exemple l'acétate ou le propionate de vinyle.

On peut aussi utiliser avantageusement des terpolymères obtenus par copolymérisation des copolymères précédents avec des acides carboxyliques insaturés, leurs sels ou leurs anhydrides. Des exemples d'anhydrides d'acide dicarboxylique insaturé sont notamment l'anhydride maléique, l'anhydride itaconique, l'anhydride citraconique, et l'anhydride tétrahydrophtalique.

La quantité d'anhydride maléique du terpolymère peut aller jusqu'à 10% et de préférence 0,2 à 6% en poids.

On peut également former des terpolymères par copolymérisation des copolymères d'éthylène précédents avec des époxydes insaturés, tels que notamment les esters et éthers de glycidyle aliphatiques tels que l'allylglycidyléther, le vinylglycidyléther, le maléate et l'itaconate de glycidyle, l'acrylate et le méthacrylate de glycidyle, et les esters et éthers de glycidyle alicycliques.

Selon un mode de réalisation plus particulièrement avantageux de l'invention, l'agent de mise oeuvre ou modifiant est un copolymère de l'éthylène et de l'acrylate de méthyle ou de l'acrylate de n-butyle.

Les copolymères de l'éthylène avec de l'acétate de vinyle peuvent aussi remplir la même fonction d'agent de mise en oeuvre mais leur stabilité thermique est médiocre au delà de 230°C.

Par polymère thermoplastique semi-cristallin, on entend en particulier les polyéthylènes de haute densité (HDPE) ou de moyenne densité, les homopolymères (HoPP) et copopolymères du propylène (PP), les polyesters thermoplastiques et leurs copolymères, les polyamides tels que notamment les polyamides 6.6 et leurs copolymères, les polyacétals ou polyoxyméthylène (POM).

Le terme polyester désigne des polymères qui sont des produits saturés de condensation de glycols et d'acides dicarboxyliques ou de leurs dérivés. De préférence ils comprennent les produits de condensation d'acides dicarboxyliques aromatiques ayant de 8 à 14 atomes de carbone et d'au moins un glycol choisi parmi le groupe constitué du neopentylglycol, du cyclohexanediméthanol et des glycols aliphatiques de formule HO(CH₂)ₙOH dans laquelle n est un entier valant de 2 à 10.

Les polyesters préférés sont le polyéthylène téréphtalate (PET), le poly(1,4-butylène) téréphtalate (PBT), et le 1,4-cyclohexylène diméthylène téréphtalate/isophtalate.

Sont également inclus les polyesters élastomères du type copolyester bloc polyéther tels que notamment les PBT/PTMG (polytétraméthylèneglycol).

Le MFI de ces polyesters, mesuré à 250°C sous une pression de 2.16 kg (selon la norme ASTM D 1238), peut varier de 2 à 100 et avantageusement de 10 à 80 g/10min.

On entend par polyamide les produits de condensation :
- d'un ou plusieurs aminoacides, tels les acides aminocaproïques, amino-7-heptanoïque, amino-11-undécanoïque et amino-12-dodécanoïque, d'un ou plusieurs lactames tels que le caprolactame, l'oenantholactame et le lauryllactame ;
- d'un ou plusieurs sels ou mélanges de diamines telles l'hexaméthylène-diamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;
- ou des mélanges de plusieurs monomères ce qui conduit à des copolyamides.

On peut utiliser des mélanges de polyamides. On utilise avantageusement le PA 6, le PA 6.6, le PA 11, le PA 12.

Par polymère thermoplastique amorphe, on entend notamment le polystyrène (PS), le polycarbonate (PC), le PVC non plastifié, ou l'un de leurs mélanges.

Ces polymères thermoplastiques peuvent être modifiés par addition de charges minérales telles que les fibres de verre, le talc, le mica, le kaolin, les differents types de carbonates de calcium, les additifs de stabilisation thermique ou UV, les additifs colorants, et les élastomères usuellement utilisés pour modifier leur résistance aux chocs. Ils peuvent se présenter sous formes d'alliages.

### I) -Exemples d'objets formés par moulage par injection

Les objets des exemples suivants, obtenus par moulage par injection, ont été injectés dans des moules multi-empreintes, refroidis avec une circulation d'eau à débit constant et température constante de 15°C ± 2°C.Ces moules sont montés sur des presses à injecter de type Billion Hercule, caractérisées par des forces de fermeture du moule de 150 tonnes.

Pour tous les objets témoins, on procède de la façon suivante : le profil de température affiché sur la vis de plastification est fixé pour une matière thermoplastique à mouler donnée et la matière est dosée avec une assez forte contre-pression au dosage, afin d'obtenir une bonne homogénéité de cette matière. La vitesse d'injection et le temps de refroidissement sont ensuite réglés, de façon à obtenir des objets sans défauts visibles, avec le temps de cycles le plus court. Les données caractéristiques de l'injection sont relevées, une fois que la presse a atteint son régime stable :
- pression maximale au moment de l'injection, pour une vitesse d'injection constante et fixée ;
- temps du cycle de moulage qui correspond essentiellement au temps de refroidissement.

Pour les objets des exemples 1 à 7 de la présente invention, on procède de la façon suivante, par rapport au témoin : la matière thermoplastique témoin est remplacée par un mélange à sec de granulés de cette matière, avec un copolymère de l'éthylène et de l'acrylate de méthyle, LOTRYL® 20 MA08, commercialisé par ATOFINA, caractérisé par un indice de fluidité ou MFI de 8 grammes/ 10minute (mesuré à 190°C sous une charge de 2,16kg) et un taux d' acrylate de méthyle de 20% en poids, le mélange matière thermoplastique / agent modifiant est réalisé dans des proportions pondérales de 97/3, sans modifier les réglages de la presse. Ce mélange étant beaucoup plus fluide que le témoin, aux vitesses d'écoulement de l'injection, la pression maximale d'injection diminue. Le profil de température de la vis de plastification est alors modifié de 10 à 20°C pour refroidir le mélange et revenir à la même pression d'injection que le témoin, la vitesse d'injection restant constante par rapport au témoin. Cette diminution de la température matière permet de raccourcir le cycle de refroidissement et se traduit par des gains de temps de cycle situés entre 5 et 35%

### Témoin 1

Moule de bouchon alimentaire en polyéthylène haute densité (PEHD) de MFI égal à 2 g/ 10min (mesuré à190 °C, sous 2,16 kg).
Profil thermique affiché dans les différentes zones de la vis : 225°-225°-225°-225°-220°C
Pression d'injection :12 MPa
Temps de cycle de 8,4 secondes.

### Exemple 1

Pression d'injection de 12MPa
Le profil thermique est modifié de la façon suivante : 210°-210°-210°-210°-210°C
Temps de cycle de 7,3 secondes
Gain de cadence de 13%

### Témoin 2

Moule de bouchon cosmétique en polypropylène homopolymère (HoPP) de MFI égal à 40 g/10 min (mesuré à 230°C/2,16kg)
Profil thermique le long de la vis : 215°-220°-225°-225°-225°C
Pression d'injection : 11 MPa
Temps de cycle de 20,2 secondes

### Exemple 2

Pression d'injection de 11 MPa
Profil thermique de 200°-205°-210°-210°-210°C
Temps de cycle de 17,2 secondes
Gain de cadence de 14,8%

### Témoin 3

Moule de patin d'usure en copolyester bloc polyether (PBT /PTMG :
polytétraméthylèneglycol), élastomère.
Profil thermique : 180°-190°-210°-220°-220°C
Pression d'injection : 7 MPa
Temps de cycle: 35 secondes

### Exemple 3

Pression d'injection de 7 MPa
Profil thermique : 160°- 170°-190° -200°-200°C
Temps de cycle : 27 secondes
Gain de cadence : 23%

### Témoin 4

Moule de couvre-culasse en polyamide (PA 6.6 )de basse viscosité chargé à 35% en poids de fibres de verre
Profil thermique : 315°-315°-315°-320°-320°C
Pression d'injection : 12 MPa
Temps de cycle: 45,5 secondes

### Exemple 4

Pression d'injection : 12MPa
Profil thermique : 285°-285°-285°-290°- 290°C
Temps de cycle: 37,4 secondes
Gain de cadence :18%

### Témoin 5

Moule de boîtier en polystyrène (PS) choc de MFI égal à 12 g/10min Profil thermique : 210°-220°-230°-230°-230°C
Pression d'injection : 7,5 MPa
Temps de cycle: 12,2 secondes

### Exemple 5

Pression d'injection : 7,5 MPa
Profil thermique : 190°-200°-210°-210°-210°C
Temps de cycle: 10,1 secondes
Gain de cadence : 18%

### Témoin 6

Moule corps de stylo en polycarbonate (PC), qualité injection
Profil thermique : 270°- 275°-280°-285°-290°C
Pression d'injection de 8 MPa
Temps de cycle: 15,2 secondes

### Exemple 6

Pression d'injection : 8 MPa
Profil thermique : 250°-255°-260°-265°-270°C
Temps de cycle: 12,1 secondes
Gain de cadences : 20%

### Témoin 7

Moule de robinetterie en polychlorure de vinyl rigide (PVC)
Profil thermique : 165°-170°-180°-190°-190°C
Pression d'injection : 7,5 MPa
Temps de cycle: 43 secondes

### Exemple 7

Pression d'injection : 7,5 MPa
Profil thermique ; 145°-150°-160°-170°-170°C
Temps de cycle: 30 secondes
Gain de cadence : 30%

L'exemple suivant a été réalisé en remplaçant la matière thermoplastique témoin par un mélange à sec de granulés de cette matière, avec un copolymère de l'éthylène et de l'acétate de vinyle, l'Evatane® 10.20VN4 d'ATOFINA, ayant une teneur en acétate de vinyle de 14 % en poids et un MFI de2 g/10 mn (à 190°C/2.16kg).

### Témoin 8

Moule de bouchon cosmétique en polyéthylène haute densité (HDPE) de MFI (230°/2,16kg) de 10 g/10 min.
Profil thermique le long de la vis : 185°-190°-200°-200°-200°C
Pression d'injection : 8.5 MPa
Temps de cycle de 12 secondes

### Exemple 8

Pression d'injection de 8.5 MPa
Profil thermique de 170°-180°-180°-180°-180°C
Temps de cycle de 8.7 secondes
Gain de cadence de 27.5%

Les résultats sont indiqués dans le tableau 1 ci-dessous :

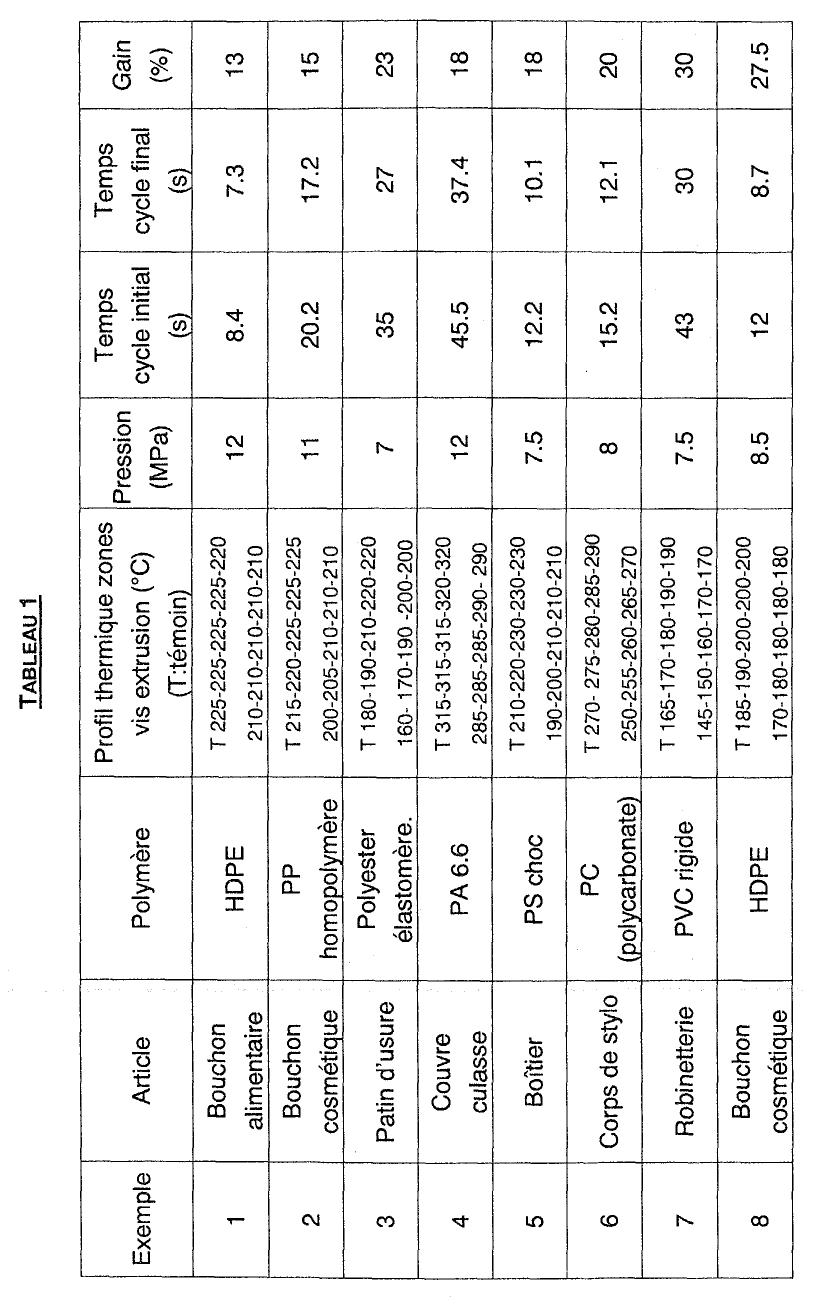

### II) Exemples d'extrusion soufflage

Les objets et compositions, obtenus en extrusion-soufflage, en témoin 9 et exemple 9 ont été soufflés dans un moule de flacon, refroidi avec une circulation d'eau à débit constant et température constante de 15°C ± 2°C.

Ce moule est monté sur une machine d'extrusion -soufflage de type Serta, à un seul moule, équipée d'une extrudeuse ayant une vis de 50mm de diamètre.

Pour tous les flacons témoins, on procède de la façon suivante : le profil de température affiché sur la vis de plastification est fixé pour une matière thermoplastique d'extrusion-soufflage donnée et la matière est extrudée à une température suffisamment basse pour que la paraison ne flue pas sous son propre poids et suffisamment élevée pour obtenir des objets sans défauts visibles lorsque la matière soufflée entre en contact avec le moule. Les données caractéristiques de l'extrusion -soufflage sont relevées, une fois que la machine a atteint son régime stable :
- profil de température d'extrusion et pression en tête de vis ;
- temps du cycle complet qui correspond essentiellement au temps de refroidissement, l'extrusion se faisant en temps masqué.

Pour les objets de la présente invention, on procède de la façon suivante : par rapport au témoin la matière thermoplastique témoin est remplacée par un mélange à sec de granulés de cette matière, avec un copolymère de l'éthylène et d'acétate de vinyle caractérisé par un indice de fluidité ou MFI de 4 grammes/ 10minute (à 190°C sous une charge de 2 ,16kg) et un taux d' acétate de vinyle de 14% en poids , dans des proportions pondérales de 97/3, sans modifier les réglages de l'extrudeuse. Ce mélange étant beaucoup plus fluide que le témoin, aux vitesses de cisaillement de l'extrusion, la pression maximale en tête de vis diminue. Le profil de température de la vis de plastification est alors modifié de 10 à 20°C pour refroidir le mélange et revenir à la même pression d'extrusion que le témoin, la vitesse de rotation de la vis d'extrusion restant constante par rapport au témoin. Cette diminution de la température matière permet de raccourcir le cycle de refroidissement et se traduit par un gain de temps de cycle compris entre environ 10 et 30%.

### Témoin 9 :

Extrusion de flacons de PEHD de MFI de 0.5 g/10min (mesuré à 190°C sous 2.16 kg) Profil thermique sur la vis d'extrusion : 160° 165° 170° 180° 180° 200° 200°C
Pression en tête de vis : 12MPa
Temps de cycle de 19 secondes

### Exemple 9 :

Profil thermique sur la vis d'extrusion : 150° 155° 160° 165° 165° 180° 180°C
Pression en tête : 12MPa
Temps de cycle: 15 secondes
Gain du temps de cycle: 21 %

## Revendications

1. Procédé permettant d'améliorer la productivité au cours de la fabrication d'articles à base de polymères thermoplastiques, par addition en mélange à ceux-ci d'agents modifiants, **caractérisé en ce que** lesdits agents modifiants sont des copolymères d'éthylène et d'au moins un ester d'acides carboxyliques saturés ou insaturés, et que le taux d'addition de ces agents modifiant est compris entre 0.5 et 5% en poids par rapport au poids du mélange, de façon à réduire le temps de cycle dudit procédé.

2. Procédé selon la revendication 1, **caractérisé en ce que** les agents modifiants sont des copolymères d'éthylène et de (meth)acrylate d'alkyle, l'alkyle comprenant moins de 6 atomes de carbone.

3. Procédé selon les revendications 1 et 2, **caractérisé en ce que** la fabrication est réalisée par moulage par injection.

4. Procédé selon les revendications 1 et 2, **caractérisé en ce que** la fabrication est réalisée par extrusion-soufflage de corps creux.

5. Procédé selon la revendication 3, **caractérisé en ce qu'**il permet de réduire le temps de cycle d'injection d'environ 5 à 35%.

6. Procédé selon la revendication 4, **caractérisé en ce qu'**il permet de réduire le temps de cycle d'environ 10 à 30%.

7. Articles obtenus par le procédé selon les revendications 3 ou 4, **caractérisés en ce que** les polymères thermoplastiques mis en oeuvre sont semi-cristallins, du type des polypropylènes, des polyéthylènes, des polyamides, des polyesters ou des polyacétals.

8. Articles obtenus par le procédé selon la revendication 3, **caractérisés en ce que** les polymères thermoplastiques mis en oeuvre sont constitués de thermoplastiques rigides amorphes du type du polystyrène, du PVC, du polycarbonate, ou de leurs mélanges.
